# EUROPEAN PATENT SPECIFICATION

(11) **EP 2 854 195 B1**
(45) Date of publication and mention of the grant of the patent: **19.07.2017**
(21) Application number: 14187187.1
(22) Date of filing: 30.09.2014
(51) Int. Cl.: H01M 2/02, H01M 10/42, H01M 10/48, H01M 2/06, H01M 10/44

(54) **Batterypack with protective circuit module**
Batteriepack mit Schutzschaltung Modul
Bloc-batteries avec module de circuit de protection

(30) Priority: 30.09.2013 US 201361884434 P; 29.09.2014 US 201414499899
(43) Date of publication of application: 01.04.2015
(73) Proprietor: Samsung SDI Co., Ltd., Yongin-si, Gyeonggi-do (KR)
(72) Inventor: WON, Hee-Youn, Gyeonggi-do (KR); MOON, Dae-Yon, Gyeonggi-do (KR)
(74) Representative: Mounteney, Simon James

(56) References cited:
- EP-A1- 2 405 508
- EP-A1- 2 515 358
- GB-A- 2 379 553
- KR-A- 20130 048 759
- US-A1- 2006 068 275
- US-A1- 2011 123 838
- US-A1- 2013 149 562
- US-A1- 2013 171 508

## Description

### BACKGROUND

### 1. Field

An aspect of the present invention relates to a battery pack, and more particularly, to a battery pack having improved safety.

### 2. Description of the Related Art

In general, secondary batteries refer to rechargeable batteries, unlike primary batteries that cannot be charged. The secondary batteries are widely used in fields of electronic devices such as cellular phones, notebook computers and camcorders.

Among various kinds of secondary batteries, a lithium secondary battery has a high operation voltage and a high energy density per weight, and hence has been widely used. The lithium secondary battery is manufactured in several types, and the representative types of the lithium secondary battery are a cylinder type, a can type and a pouch type.

Among these secondary batteries, a pouch-type secondary battery is sealed in a state in which an electrode assembly is inserted into a pouch, and an electrode lead connected to an electrode tab of the electrode assembly is connected to a protecting circuit module (PCM).

US 2011/123838 A1, EP 2 515 358 A1, US 2011/123838 A1 and
US 2006/068275 A1 each disclose a secondary battery including a protection circuit module.

### SUMMARY

Embodiments provide a battery pack in which a bending portion is formed in a connecting tab which connects a temperature control portion and a protecting circuit module (PCM), so that it is possible to minimize the gap between the temperature control portion and a sealing portion of a case, thereby more precisely sensing heat generated in a battery cell.

In a first aspect, the present invention provides a battery pack as recited in claim 1.

According to an embodiment the at least one electrode lead is formed to protrude from said electrode assembly, the electrode lead being exposed to the outside of the case, the case having a sealing portion formed along an edge portion at the side where the electrode lead is extracted and the PCM being mounted on an outer surface of the sealing portion of the case, the PCM being connected to the electrode lead, wherein the PCM and the temperature control portion are connected by a connecting tab, and wherein the connecting tab includes a first connecting portion connected to the temperature control portion, a second connecting portion connected to the PCM, and a bending portion configured to connect the first and second connecting portions to be stepped.

The PCM may be mounted while being contacted with the first area of the sealing portion, and the temperature control portion may be mounted while being contacted with the second area of the sealing portion.

The first connecting portion of the connecting tab may be formed at a position lower than that of the second connecting portion.

The temperature control portion may include a body portion, and extending portions respectively extended from one areas of both sides of the body portion. The extending portion may be connected to an upper surface of the first connecting portion of the connecting tab.

A lower surface of the body portion of the temperature control portion may be positioned lower than the first connecting portion of the connecting tab.

The height of the bending portion of the connecting tab may be formed lower than the difference in thickness between the first and second areas of the sealing portion.

A groove portion is formed in the PCM, and the temperature control portion may be positioned at the groove portion.

The first connecting portion of the connecting tab may be formed in a quadrangular shape so that the bending portion and the second connecting portion are formed to extend from at least one side of the first connecting portion.

The first and second connecting portions of the connecting tab may be formed in parallel to each other.

An insulating tape may be further formed on an outer surface of the electrode lead, positioned at the sealing portion.

Further embodiments are disclosed in the attached dependent claims.

According to an embodiment of the present invention, a bending portion is formed in a connecting tab which connects a temperature control portion and a protecting circuit module (PCM), so that it is possible to minimize the gap between the temperature control portion and a sealing portion of a case, thereby more exactly sensing heat generated in a battery cell. Accordingly, it is possible to improve the safety of the battery pack.

### BRIEF DESCRIPTION OF THE DRAWINGS

Embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is an assembled perspective view of a battery pack according to an embodiment of the present invention.
FIG. 2 is an exploded perspective view of the battery pack of FIG. 1.
FIG. 3 is a perspective view showing a temperature control portion and connecting tabs according to the embodiment of the present invention.
FIG. 4 is a sectional view taken along line A-A' of FIG. 1.
FIG. 5 is a sectional view taken along line B-B' of FIG. 1.

### DETAILED DESCRIPTION

In the following detailed description, only certain embodiments of the present invention have been shown and described, simply by way of illustration. As those skilled in the art would realize, the described embodiments may be modified in various different ways, all without departing from the scope of the present invention as defined by the appended claims. Accordingly, the drawings and description are to be regarded as illustrative and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

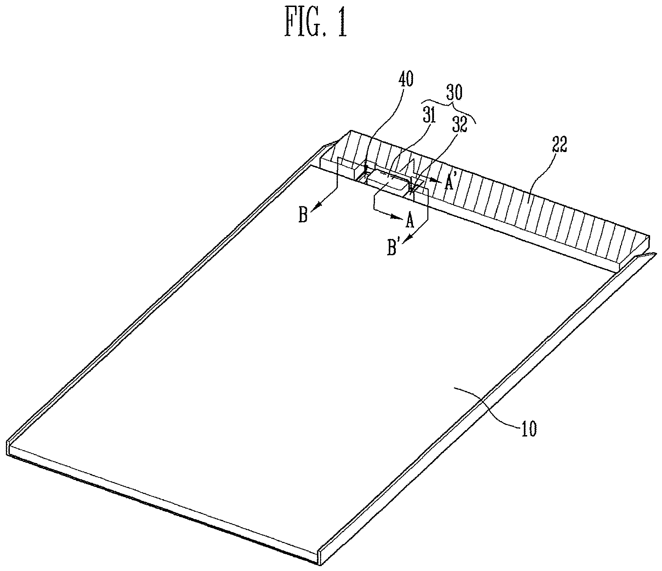

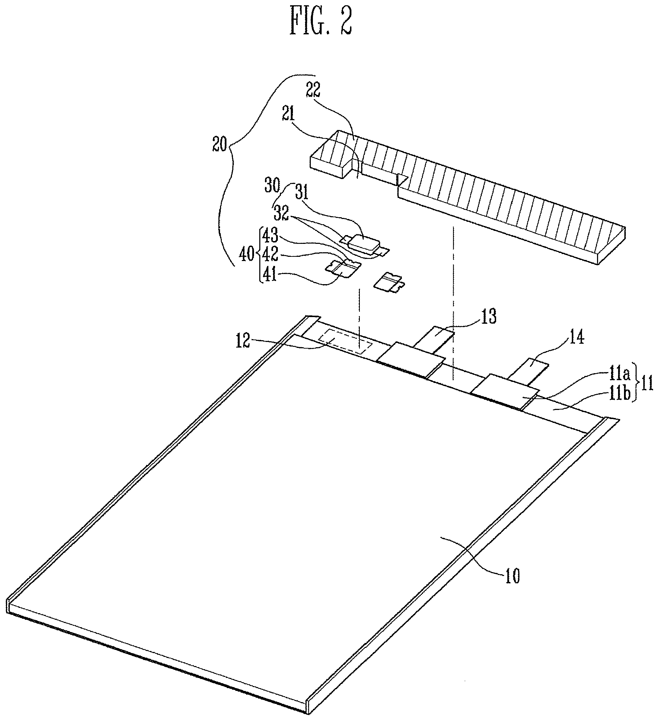

FIG. 1 is an assembled perspective view of a battery pack according to an embodiment of the present invention. FIG. 2 is an exploded perspective view of the battery pack of FIG. 1.

Referring to FIGS. 1 and 2, the battery pack according to this embodiment includes an electrode assembly (not shown), a case 10 configured to accommodate the electrode assembly therein, and a protecting circuit module (PCM) 20 provided with a temperature control portion 30. A groove portion 21 is formed in one area of a substrate 22 of the PCM 20. The groove portion 21 is an area in which the temperature control portion 30 is positioned. The substrate 22 and the temperature control portion 30 are connected by connecting tabs 40.

One or more electrode leads 13 and 14 are formed to protrude from the electrode assembly. The electrode assembly is accommodated in the case 10 so that portions of the electrode leads 13 and 14 are exposed to the outside of the case 10. A sealing portion 11 is formed along an edge portion at the side where the electrode leads 13 and 14 are extracted in the case 10. The PCM 20 is connected to the electrode leads 13 and 14. The PCM 20 is mounted on an outer surface of the sealing portion 11 of the case 10.

Here, the sealing portion 11 includes a first area 11a in which the electrode leads 13 and 14 are positioned, and a second area 11b which is an area of the sealing portion 11 except the first area 11a. The sealing portion 11 is formed so that the thickness of the first area 11 a is different from that of the second area 11 b. That is, the thickness of the first area 11a is formed thicker due to the thickness of the electrode lead 13 or 14 than the thickness of the second area 11 b. For example, when the thickness of the first area 11 a is 0.9mm and the thickness of the second area 11 b is 0.4mm, the difference in thickness between the first and second areas 11a and 11b is 0.5mm. An insulating tape (not shown) may be further formed on an outer surface of the electrode lead 13 or 14 positioned at the sealing portion 11. Here, the thickness of the insulating tape is not considered.

The connecting tab 40 includes a first connecting portion 41 connected to the temperature control portion 30, a second connecting portion 43 connected to the PCM 20, and a bending portion 42 configured to connect the first and second connecting portions 41 and 43 to be stepped. In this case, the first connecting portion 41 of the connecting tab 40 is formed at a position lower than that of the second connecting portion 43. That is, the first and second connecting portions 41 and 43 are formed stepped by the height of the bending portion 42. Here, the first and second connecting portions 41 and 43 may be formed in parallel to each other.

The temperature control portion 30 includes a body portion 31 configured to sense the heat of a battery cell, and extending portions 32 respectively extended from one areas of both sides of the body portion 31. The extending portion 32 of the temperature control portion 30 is mounted and connected to an upper surface of the first connecting portion 41 of the connecting tab 40. The second connecting portion 43 of the connecting tab 40 is connected to a lower surface of the PCM 20. In this case, the first connecting portion 41 and the extending portion 32 are connected through welding, and the second connecting portion 43 and the PCM 20 are connected through welding.

The PCM 20 and the temperature control portion 30 connected thereto are mounted on the sealing portion 11. In this case, the lower surface of the PCM 20 is mounted while being contacted with the first area 11 a of the sealing portion 11, and the temperature control portion 30 is mounted while being contacted with the second area 11 b of the sealing portion 11. That is, the temperature control portion 30 is mounted on a mounting portion 12 of the temperature control portion 30, formed in one area of the second area 11 b. As such, the gap between the second area 11 b of the sealing portion 11 and the temperature control portion 30 can be minimized by the step difference between the first and second connecting portions 41 and 43, which is formed by the bending portion 42 of the connecting tab 40.

Accordingly, the heat sensing function of the temperature control portion 30 is improved, so that the safety of the battery pack can be improved.

Hereinafter, a pouch-type case and an electrode assembly accommodated therein in the battery pack according to this embodiment will be described.

The case 10 is formed as a pouch-type case, and the pouch-type case is formed with a plurality of layers including a metal layer. The case 10 is sealed after an electrode assembly is accommodated in the case 10. The sealing portion 11 of the case 10 is formed through thermal fusion, and therefore, an inner surface of the pouch case is preferably made of a thermal adhesive resin for the purpose of sealing.

The electrode assembly accommodated in the case is formed by winding a first electrode plate, a second electrode plate and a separator interposed therebetween. A first electrode tab is connected to the first electrode plate to protrude from an upper end portion of the electrode assembly, and the second electrode tab is connected to the second electrode plate to protrude from an upper end portion of the electrode assembly. In the electrode assembly, the first and second electrode tabs are spaced apart from each other at a predetermined distance to be electrically insulated from each other.

A lamination tape is wound around a portion at which the first or second electrode tab is extracted from the electrode assembly. The lamination tape blocks heat generated in the first or second electrode tab. In addition, the lamination tape allows the electrode assembly not to be compressed by an edge of the first or second electrode tab.

The first and second electrode tabs are respectively connected to the first and second electrode leads 13 and 14. Portions of the first and second electrode leads 13 and 14 are exposed to the outside of the case 10, and the first and second electrode leads 13 and 14 are accommodated in the case 10. In this case, an insulating tape (not shown) is adhered to the first or second electrode lead 13 or 14 contacted with the sealing portion 11 of the case 10. The insulating tape is formed to prevent a short circuit between the first or second electrode lead 13 or 14 and the case 10.

Here, it has been described that the electrode assembly is formed by the first electrode plate, the second electrode plate and the separator interposed therebetween. However, it will be apparent that the electrode assembly may be formed by stacking the first electrode plate, the second electrode plate with the separator interposed therebetween.

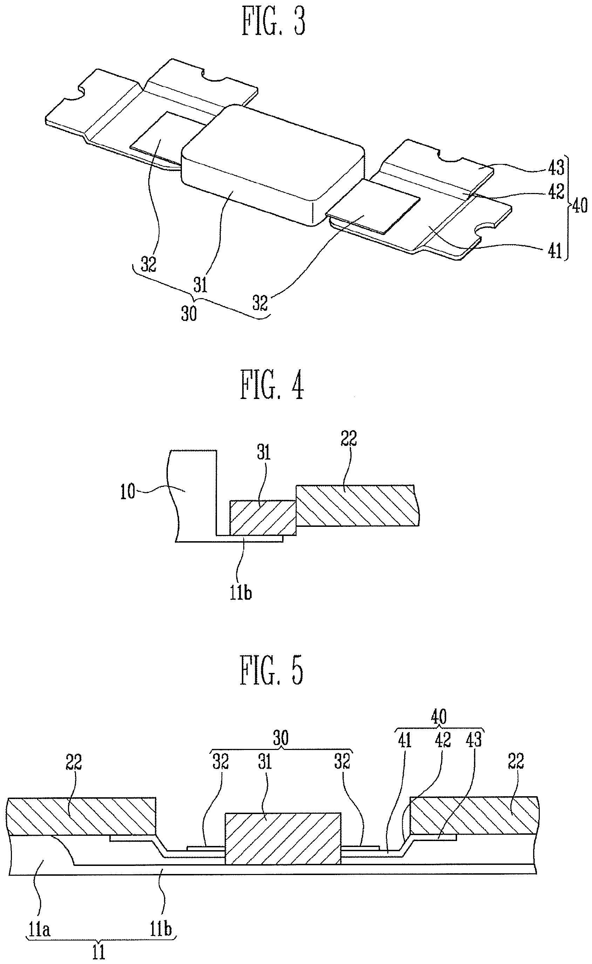

FIG. 3 is a perspective view showing the temperature control portion and the connecting tabs according to an embodiment of the present invention.

Referring to FIG. 3, the temperature control portion 30 includes a body portion 31, and extending portions 32 respectively extended from one areas of both sides of the body portion 31. In this case, the extending portion 32 is not extended from a lower portion of the side of the body portion 31 but extended from one area of the middle of the body portion 31. That is, the extending portion 32 is formed to be spaced apart from the lower surface of the body portion 31 at a predetermined distance.

The connecting tabs 40 are components which connect the PCM 20 (see FIG. 1) and the temperature control portion 30. Each connecting tab 40 includes a first connecting portion 41 connected to the temperature control portion 30, a second connecting portion 43 connected to the PCM 20, and a bending portion 42 configured to connect the first and second connecting portions 41 and 43 to be stepped. The bending portion 42 is bent at a predetermined angle in the direction upward the outside of the first connecting portion 41. The first and second connecting portions 41 and 43 may be formed in parallel with each other. In this case, the first connecting portion 41 is formed at a position lower than that of the second connecting portion 43.

The first connecting portion 41 of the connecting tab 40 is formed in a quadrangular shape. The bending portion 42 and the second connecting portion 43 are formed to extend from at least one side of the first connecting portion 41, e.g., two sides of the first connecting portion 41 in this embodiment. Here, the shape of the connecting tab 40 is not limited, and may be formed in another shape in which the first and second connecting portions 41 and 43 are formed stepped, to connect the PCM 20 and the temperature control portion 30.

The extending portion 32 of the temperature control unit 30 is connected to an upper surface of the first connecting portion 41 of the connecting tab 40 when being connected to the connecting tab 40. In this case, the extending portion 32 of the temperature control portion 30 is extended from one area of the side of the body portion 31, spaced apart from the lower surface of the body portion 31. The lower surface of the body portion 31 of the temperature control portion 30 is positioned lower than the first connecting portion 41 of the connecting tab 40.

FIG. 4 is a sectional view taken along line A-A' of FIG. 1. FIG. 5 is a sectional view taken along line B-B' of FIG. 1.

Referring to FIGS. 4 and 5, the PCM 20 and the temperature control portion 30 connected to the PCM 20 are mounted on the sealing portion 11 of the case 10. In this case, the PCM 20 is mounted while being in contact with the first area 11 a of the sealing portion 11, and the temperature control portion 30 is mounted while being in contact with the second area 11 b of the sealing portion 11.

Generally, the connecting tab 40 which connects the PCM 20 and the temperature control portion 30 has a flat shape. Hence, the temperature control portion 30 is positioned to be spaced apart from the second area 11 b by the difference in thickness between the first area 11a of the sealing portion 11, in which the electrode lead is positioned, and the second area 11 b that is the other area except the first area 11 a. Therefore, the temperature control portion 30 has difficulty in exactly sensing the heat generated in the battery cell.

According to this embodiment, the bending portion 42 is formed in the connecting tab 40, so that the first connecting portion 41 connected to the extending portion 32 of the temperature control portion 30 and the second connecting portion 43 connected to the lower surface of the PCM 20 are formed such that they have a step difference. In this case, the bending portion 42 connects the first and second connecting portions 41 and 43 so that the first connecting portion 41 is formed at a position lower than that of the second connecting portion 43. The extending portion 32 of the temperature control portion 30 is connected to the first connecting portion 41 while being mounted on an upper surface of the first connecting portion 41.

The state in which the PCM 20 and the temperature control portion 30 are connected by the connecting tabs 40 will be described. The PCM 20 is mounted on the first area 11 a of the sealing portion 11, and the body portion 31 of the temperature control portion 30 is mounted on the second area 11 b of the sealing portion 11. That is, the bending portion 42 of the connecting tab 40 compensates for the height by the difference in thickness between the first and second areas 11 a and 11b of the sealing portion 11. Accordingly, it is possible to minimize the gap between the body portion 31 of the temperature control portion 30 and the second area 11 b of the sealing portion 11.

The lower surface of the body portion 31 of the temperature control portion 30 is positioned lower than the first connecting portion 41 of the connecting tab 40. The height of the bending portion 42 of the connecting tab 40 may be formed lower than the difference in thickness between the first and second areas 11 a and 11 b of the sealing portion 11. In this case, the lower surface of the first connecting portion 41 of the connecting tab 40 is formed to be spaced apart from the second area 11 b of the sealing portion 11 at a predetermined distance.

As such, the bending portion 42 is formed in the connecting tab which connects the temperature control portion 30 and the PCM 20, so that it is possible to minimize the gap between the temperature control portion and the sealing portion 11 of the case 10. Accordingly, it is possible to more exactly sense the heat generated in the battery cell, thereby improving the safety of the battery pack.

Embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery pack (20) comprising
an electrode assembly;
a case (10); and
a protection circuit module;
wherein the case (10) is a pouch that accommodates said electrode assembly, and at least one electrode lead (13, 14) extends from said electrode assembly through said case (10) at an edge of said case (10);
the battery pack further comprising a sealing portion (11) provided at said edge, the sealing portion (11) accommodating said at least one electrode lead (13, 14) in a first area, such that the sealing portion in the first area (11 a) is thicker than the sealing portion in a second area (11 b) away from said at least one electrode lead (13, 14);
wherein the protection circuit module (20) comprises a temperature control portion (30), the protection circuit module (20) having a lower surface, the temperature control portion (30) protruding from the lower surface of the protection circuit module (20),
the protection circuit module (20) being provided with its said lower surface in contact with the first area (11 a) of the sealing portion and with the protruding temperature control portion (30) in contact with the second area (11 b) of the sealing portion.

2. A battery pack according to claim 1, wherein the protection circuit module has a main portion and said temperature control portion (30) is connected to said main portion via a connecting tab and said connecting tab (40) comprises a bending portion (42) configured to allow said temperature control portion (30) to protrude from the lower surface of the protection circuit module (20).

3. A battery pack according to claim 2, wherein the connecting tab comprises a first connecting portion (41) connected to the temperature control portion (30) and a second connecting portion (42) connected to the main portion, the bending portion allowing the first (41) and second (42) connecting portions to be at different levels with respect to the said lower surface.

4. A battery pack according to claim 3, wherein the first connecting portion (41) of the connecting tab (40) is quadrangular in shape and the bending portion (42) and the second connecting portion (43) are formed to extend from at least one side of the first connecting portion (41).

5. A battery pack according to any of claims 2 to 4, wherein the temperature control portion (30) comprises a body portion (31) and extending portions (32) extending from both sides of the body portion (30).

6. A battery pack according to claim 5 when dependent on either of claims 3 or 4, wherein an extending portion (32) is connected to an upper surface of the first connecting portion (41).

7. A battery pack according to either of claims 5 or 6, wherein a lower surface of the body portion (31) of the temperature control portion (30) is positioned lower than the connecting tab (40).

8. A battery pack according to any of claims 2 to 7, wherein the height of the bending portion (42) of the connecting tab (40) is less than the difference in thickness between the first (11 a) and second (11 b) areas of the sealing portion (11).

9. A battery pack according to any preceding claim, wherein a groove portion is provided in the protection circuit module (20) and the temperature control portion (30) is positioned at the groove portion.

10. A battery pack according to claim 9 when dependent on claim 2, comprising two said connecting tabs (40) wherein the connecting tabs (40) are spaced apart along a first direction and the length of the temperature control portion (30) in the first direction is shorter than the length of the groove portion in the first direction.

11. A battery pack according to any of claims 5 to 7, wherein a lower surface of the body portion (31) of the temperature control portion (30) is positioned lower than the extending portions (32).

12. A battery pack according to any of claims 5 to 7 or 11, wherein the first connecting portion (41) is connected to an extending portion (32) via a welded connection.

13. A battery pack according to any preceding claim, wherein an insulating tape is provided on an outer surface of the at least one electrode lead (13, 14).

14. A battery pack according to any preceding claim, wherein the protection circuit module (20) is connected to the said at least one electrode lead (13, 14) and is configured to prevent said battery pack from over charging.

## Patentansprüche

1. Batteriepack (20), umfassend
eine Elektrodenbaugruppe,
ein Gehäuse (10) und
ein Schutzschaltungsmodul;
wobei das Gehäuse (10) eine Tasche ist, die die Elektrodenbaugruppe aufnimmt, und sich mindestens ein Elektrodenkabel (13, 14) von der Elektrodenbaugruppe durch das Gehäuse (10) an einer Kante des Gehäuses (10) erstreckt;
wobei der Batteriepack ferner einen abdichtenden Abschnitt (11) umfasst, der an der Kante bereitgestellt ist, wobei der abdichtende Abschnitt (11) das mindestens eine Elektrodenkabel (13, 14) in einem ersten Bereich aufnimmt, derart, dass der abdichtende Abschnitt in dem ersten Bereich (11a) dicker ist als der abdichtende Abschnitt in einem zweiten Bereich (11b), weg von dem mindestens einen Elektrodenkabel (13, 14);
wobei das Schutzschaltungsmodul (20) einen Temperaturkontrollabschnitt (30) umfasst, wobei das Schutzschaltungsmodul (20) eine untere Fläche hat, wobei der Temperaturkontrollabschnitt (30) aus der unteren Fläche des Schutzschaltungsmoduls (20) vorspringt,
wobei das Schutzschaltungsmodul (20) so bereitgestellt wird, dass seine untere Fläche mit dem ersten Bereich (11a) des abdichtenden Abschnitts in Kontakt steht und mit dem vorspringenden Temperaturkontrollabschnitt (30) mit dem zweiten Bereich (11b) des abdichtenden Abschnitts in Kontakt steht.

2. Batteriepack nach Anspruch 1, wobei das Schutzschaltungsmodul einen Hauptabschnitt hat und der Temperaturkontrollabschnitt (30) mit dem Hauptabschnitt über eine Anschlusszunge verbunden ist, und die Anschlusszunge (40) einen sich biegenden Abschnitt (42) umfasst, der so ausgelegt ist, dass er gestattet, dass der Temperaturkontrollabschnitt (30) aus der unteren Fläche des Schutzschaltungsmoduls (20) vorspringt.

3. Batteriepack nach Anspruch 2, wobei die Anschlusszunge einen ersten verbindenden Abschnitt (41) umfasst, der mit dem Temperaturkontrollabschnitt (30) verbunden ist, und einen zweiten verbindenden Abschnitt (42), der mit dem Hauptabschnitt verbunden ist, wobei der sich biegende Abschnitt ermöglicht, dass sich der erste (41) und der zweite (42) verbindende Abschnitt in Bezug auf die untere Fläche auf unterschiedlichen Ebenen befinden.

4. Batteriepack nach Anspruch 3, wobei der erste verbindende Abschnitt (41) der Anschlusszunge (40) eine viereckige Form hat, und der sich biegende Abschnitt (42) und der zweite verbindende Abschnitt (43) so ausgebildet sind, dass sie sich von mindestens einer Seite des ersten verbindenden Abschnitts (41) aus erstrecken.

5. Batteriepack nach einem der Ansprüche 2 bis 4, wobei der Temperaturkontrollabschnitt (30) einen Körperabschnitt (31) und sich erstreckende Abschnitte (32) umfasst, die sich von beiden Seiten des Körperabschnitts (30) aus erstrecken.

6. Batteriepack nach Anspruch 5 bei Abhängigkeit von Anspruch 3 oder 4, wobei ein sich erstreckender Abschnitt (32) mit einer oberen Fläche des ersten verbindenden Abschnitts (41) verbunden ist.

7. Batteriepack nach einem der Ansprüche 5 oder 6, wobei eine untere Fläche des Körperabschnitts (31) des Temperaturkontrollabschnitts (30) tiefer positioniert ist als die Abschlusszunge (40).

8. Batteriepack nach einem der Ansprüche 2 bis 7, wobei die Höhe des sich biegenden Abschnitts (42) der Anschlusszunge (40) kleiner ist als die Differenz in der Dicke zwischen dem ersten (11a) und dem zweiten (11b) Bereich des abdichtenden Abschnitts (11).

9. Batteriepack nach einem der vorhergehenden Ansprüche, wobei ein Nutabschnitt in dem Schutzschaltungsmodul (20) bereitgestellt ist und der Temperaturkontrollabschnitt (30) an dem Nutabschnitt positioniert ist.

10. Batteriepack nach Anspruch 9 bei Abhängigkeit von Anspruch 2, aufweisend zwei Anschlusszungen (40), wobei die Anschlusszungen (40) entlang einer ersten Richtung voneinander beabstandet sind und die Länge des Temperaturkontrollabschnitts (30) in der ersten Richtung kürzer ist als die Länge des Nutabschnitts in der ersten Richtung.

11. Batteriepack nach einem der Ansprüche 5 oder 7, wobei eine untere Fläche des Körperabschnitts (31) des Temperaturkontrollabschnitts (30) tiefer positioniert ist als die sich erstreckenden Abschnitte (32).

12. Batteriepack nach einem der Ansprüche 5 bis 7 oder 11, wobei der erste verbindende Abschnitt (41) mit einem sich erstreckenden Abschnitt (32) über eine geschweißte Verbindung verbunden ist.

13. Batteriepack nach einem der vorhergehenden Ansprüche, wobei ein Isolierband an einer Außenfläche des mindestens einen Elektrodenkabels (13, 14) bereitgestellt ist.

14. Batteriepack nach einem der vorhergehenden Ansprüche, wobei das Schutzschaltungsmodul (20) mit dem mindestens einen Elektrodenkabel (13, 14) verbunden ist und so ausgelegt ist, dass es ein Überladen des Batteriepacks verhindert.

## Revendications

1. Bloc-batteries (20) comprenant
un ensemble à électrodes ;
une enveloppe (10) ; et
un module de circuit de protection ;
dans lequel l'enveloppe (10) est une poche qui abrite ledit ensemble à électrodes, et au moins un fil d'électrode (13, 14) s'étend à partir de l'ensemble à électrodes à travers ladite enveloppe (10) au niveau d'un bord de ladite enveloppe (10) ;
le bloc-batteries comprenant en outre une section d'étanchéité (11) prévue au niveau dudit bord, la section d'étanchéité (11) abritant ledit au moins un fil d'électrode (13, 14) dans une première zone, de telle sorte que la section d'étanchéité dans la première zone (11a) est plus épaisse que la section d'étanchéité dans une deuxième zone (11b) en s'éloignant dudit au moins un fil d'électrode (13 ; 14) ;
dans lequel le module de circuit de protection (20) comprend une section de régulation de température (30), le module de circuit de protection (20) ayant une surface inférieure, la section de régulation de température (30) faisant saillie de la surface inférieure du module de circuit de protection (20),
le module de circuit de protection (20) étant fourni avec ladite surface inférieure qui est en contact avec la première zone (11a) de la section d'étanchéité et avec la section de régulation de température (30) faisant saillie qui est en contact avec la deuxième zone (11b) de la section d'étanchéité.

2. Bloc-batteries selon la revendication 1, dans lequel le module de circuit de protection a une section principale et ladite section de régulation de température (30) est connectée à ladite section principale via une patte de connexion et la patte de connexion (40) comprend une section courbée (42) configurée pour permettre à ladite section de régulation de température (30) de faire saillie à partir de la surface inférieure du module de circuit de protection (20).

3. Bloc-batteries selon la revendication 2, dans lequel la patte de connexion comprend une première section de connexion (41) connectée à la section de régulation de température (30) et une deuxième section de connexion (42) connectée à la section principale, la section courbée permettant aux première (41) et deuxième (42) sections de connexion d'être à différents niveaux par rapport à ladite surface inférieure.

4. Bloc-batteries selon la revendication 3, dans lequel la première section de connexion (41) de la patte de connexion (40) a une forme quadrangulaire et la section courbée (42) et la deuxième section de connexion (43) sont formées pour s'étendre depuis au moins un côté de la première section de connexion (41).

5. Bloc-batteries selon l'une quelconque des revendications 2 à 4, dans lequel la section de régulation de température (30) comprend une section de corps (31) et des sections de prolongement (32) s'étendant des deux côtés de la section de corps (30).

6. Bloc-batteries selon la revendication 5 lorsqu'il dépend de l'une ou l'autre des revendications 3 ou 4, dans lequel une section de prolongement (32) est connectée à une surface supérieure de la première section de connexion (41).

7. Bloc-batteries selon l'une ou l'autre des revendications 5 ou 6, dans lequel une surface inférieure de la section de corps (31) de la section de régulation de température (30) est positionnée plus bas que la patte de connexion (40).

8. Bloc-batteries selon l'une quelconque des revendications 2 à 7, dans lequel la hauteur de la section courbée (42) de la patte de connexion (40) est plus petite que la différence d'épaisseur entre les première (11a) et deuxième (11b) zones de la section d'étanchéité (11).

9. Bloc-batteries selon l'une quelconque des revendications précédentes, dans lequel une section à rainures est prévue dans le module de circuit de protection (20) et la section de régulation de température (30) est positionnée au niveau de la section à rainures.

10. Bloc-batteries selon la revendication 9 lorsqu'il dépend de la revendication 2, comprenant deux desdites pattes de connexion (40), dans lequel les pattes de connexion (40) sont espacées le long d'une première direction et la longueur de la section de régulation de température (30) dans la première direction est plus courte que la longueur de la section à rainures dans la première direction.

11. Bloc-batteries selon l'une quelconque des revendications 5 à 7, dans lequel une surface inférieure de la section de corps (31) de la section de régulation de température (30) est positionnée plus bas que les sections de prolongement (32).

12. Bloc-batteries selon l'une quelconque des revendications 5 à 7 ou 11, dans lequel la première section de connexion (41) est connectée à une section de prolongement (32) via une connexion soudée.

13. Bloc-batteries selon l'une quelconque des revendications précédentes, dans lequel un ruban isolant est prévu sur une surface externe du au moins un fil d'électrode (13, 14).

14. Bloc-batteries selon l'une quelconque des revendications précédentes, dans lequel le module de circuit de protection (20) est connecté audit au moins un fil d'électrode (13, 14) et est configuré pour empêcher ledit bloc-batteries d'être soumis à une surcharge.
